# EUROPÄISCHE PATENTSCHRIFT

(11) **EP 1 180 278 B1**
(45) Veröffentlichungstag und Bekanntmachung des Hinweises auf die Patenterteilung: **26.10.2005**
(21) Anmeldenummer: 00920346.4
(22) Anmeldetag: 01.03.2000
(51) Int. Cl.: H04L 12/00

(54) **DATENÜBERTRAGUNGSVERFAHREN UND -SYSTEM, INSBESONDERE IN EINEM KRAFTFAHRZEUG-INSASSENSCHUTZSYSTEM**
METHOD AND SYSTEM FOR DATA TRANSMISSION, NOTABLY IN A MOTOR VEHICLE OCCUPANT PROTECTION SYSTEM
PROCEDE ET SYSTEME DE TRANSMISSION DE DONNEES, EN PARTICULIER DANS UN SYSTEME DE PROTECTION DES OCCUPANTS D'UN VEHICULE AUTOMOBILE

(30) Priorität: 04.03.1999 DE 19909535
(43) Veröffentlichungstag der Anmeldung: 20.02.2002
(73) Patentinhaber: SIEMENS AKTIENGESELLSCHAFT, 80333 München (DE)
(72) Erfinder: SWART, Marten, D-93083 Obertraubling (DE); ZELGER,, 93049 Regensburg (DE)
(86) Internationale Anmeldenummer: PCT/DE2000/000619
(87) Internationale Veröffentlichungsnummer: WO 2000/052878

(56) Entgegenhaltungen:
- EP-A- 0 495 600
- US-A- 5 130 983
- US-A- 5 297 144
- US-A- 5 347 515
- PATENT ABSTRACTS OF JAPAN vol. 005, no. 133 (E-071), 25. August 1981 (1981-08-25) & JP 56 069950 A (SHINKO ELECTRIC CO LTD), 11. Juni 1981 (1981-06-11)

## Beschreibung

Die Erfindung betrifft ein Datenübertragungsverfahren und - system gemäß dem Master-Slave-Prinzip.

Aus der EP 0 507 581 A1 ist ein Datenübertragungssystem bekannt, bei dem eine Mehrzahl von Multiplex-Knoten an eine gemeinsame Busleitung angeschlossen ist. Die Multiplex-Knoten können zur Systemaktualisierung bestimmte Protokollworte senden, die einen eine Multiplex-Knotengruppe spezifizierenden Datenabschnitt und einen Bestätigungssignalabschnitt umfassen. Während des Bestätigungssignalabschnitts kann jeder angesprochene, zu der selektierten Gruppe gehörende Multiplex-Knoten ein Bestätigungssignal absetzen. Sofern sich nicht alle angesprochenen Multiplex-Knoten mit ihrem Bestätigungssignal melden, wird das Protokollwort beispielsweise zweimal wiederholt. Sofern sich auch dann noch nicht alle angesprochenen Multiplex-Knoten gemeldet haben, werden die sich nicht meldenden Knoten aus der die aktiven Knoten auflistenden Registrierungsliste ausgeschlossen. Wenn sich demgegenüber ein Knoten neu melden sollte, der bislang nicht aktiv war, wird die Registrierungsliste um diesen sich neu meldenden Knoten ergänzt.

Bei einer solchen Ausgestaltung kann sich das bekannte Sendekollisionsproblem stellen, bei dem zwei oder mehr Knoten im wesentlichen gleichzeitig zu senden versuchen. Zur Lösung dieses Problems muß in jedem Knoten eine Prioritätsreihenfolge für die Sendeberechtigung vorgegeben werden, die prioritätsniedrigeren Knoten den Sendezugriff sperrt, solange prioritätshöhere Knoten senden sollten. Vor einem Buszugriff muß daher jeder Knoten überprüfen, ob nicht bereits ein prioritätshöherer Knoten sendet, was zu einer gewissen Verzögerung bei der Signalübertragung führen kann. Ferner ist auch eine Änderung der festgelegten Prioritätsreihenfolge problematisch, da diese in allen Multiplex-Knoten selektiv registriert werden muß. Zudem können sich Synchronisationsprobleme stellen, wenn eine Synchronisierung des Zeittaktes des Betriebs der einzelnen Multiplex-Knoten angestrebt wird. In einem solchen Fall sind zusätzliche Synchronisationsschritte erforderlich.

Der Erfindung liegt die Aufgabe zugrunde, ein Datenübertragungsverfahren zu schaffen, das eine effiziente Datenübertragung ohne Kollisionsprobleme ermöglicht.

Diese Aufgabe wird mit den im Patentanspruch 1 genannten Maßnahmen gelöst.

Weiterhin wird mit der Erfindung ein Datenübertragungssystem gemäß dem Patentanspruch 9 bereitgestellt, das sich durch effiziente, kollisionsfreie Datenübertragung auszeichnet.

Vorteilhafte Ausgestaltungen der Erfindung sind in den Unteransprüchen angegeben.

Bei der Erfindung wird das Master-Slave-Prinzip eingesetzt, wobei die übergeordnete Steuereinheit die Masterfunktion ausübt und die vollständige Kontrolle über den Datenverkehr auf dem Datenbus ausübt. An den Datenbus angeschlossene Funktionseinheiten werden als Slaves betrieben und im Pollingbetrieb wiederholt, vorzugsweise zyklisch, abgefragt. Ordnungsgemäß arbeitende Funktionseinheiten, die auch keine Nachricht absetzen wollen, melden sich auf jede Pollingabfrage mit einem Bestätigungssignal. Bleibt jedoch ein Bestätigungssignal von einer oder mehreren Funktionseinheiten aus, kann die übergeordnete Steuereinheit gezielt und selektiv diese Funktionseinheit(en) adressieren und dieser die Möglichkeit geben, ihre Nachricht zu übertragen. Hiermit ist sichergestellt, daß eine relativ rasche Datenübertragung erfolgen kann, ohne daß irgendwelche Kollisionsprobleme zu befürchten sind. Sofern eine selektiv adressierte Funktionseinheit dann doch keine Nachricht übertragen sollte, ist dies ein Hinweis auf eine Funktionsstörung dieser Funktionseinheit, so daß die übergeordnete Steuereinheit eine entsprechende Störungsmeldung zur raschen Fehlerbeseitigung generieren kann, beispielsweise in Form eines optischen oder akustischen Hinweises an den Systembenutzer und/oder in Form eines Dateneintrags in einem Betriebsüberwachungsprotokoll. Mit der Erfindung wird somit nicht nur der Datenfluß auf dem Datenbus jeweils gezielt gesteuert, so daß keine Kollisionsprobleme auftreten, sondern zugleich auch noch eine Diagnosefunktion erreicht.

Bei Einsatz der Erfindung in einem Kraftfahrzeug, insbesondere einem Kraftfahrzeug-Insassenschutzsystem, können die Funktionseinheiten Sensoren, beispielsweise Aufprallsensoren oder Insassenerkennungssensoren (Sitzbelegungssensoren) sein. Die Funktionseinheiten können alternativ oder zusätzlich auch Zündpillen zum Zünden von Insassenschutzmitteln oder auch sonstige beliebige Komponenten sein. In jedem Fall wird ein multipler Zugriff der Funktionseinheiten auf den Datenbus und damit eine Kollisionsmöglichkeit mit verspäteter Übertragung von Meldesignalen (beispielsweise Sensorsignalen oder Sensorzuständen) vermieden. Die übergeordnete Steuereinheit ist jeweils allein kommunikationsbestimmend. Sofern es sich um ein zentralisiertes Steuersystem handelt, bildet die zentrale Steuereinheit die übergeordnete Steuereinheit. In einem dezentralisierten System können auch mehrere übergeordnete Steuereinheiten (Masters) mit jeweils selektiv fest zugeordneten Funktionseinheiten (Slaves) vorhanden sein. In jedem Fall ist eine sehr schnelle Datenübertragung sichergestellt.

Die übergeordnete Steuereinrichtung kann die Prioritätsreihenfolge, mit der sie sich während des Pollingsbetriebs nicht meldende Funktionseinheiten abfragt, selbst festlegen und gegebenenfalls auch jederzeit ändern, beispielsweise in Abhängigkeit von den Ergebnissen der Sitzbelegungserkennung. Zur Prioritätsfestlegung und gegebenenfalls -änderung ist damit kein Eingriff in die untergeordneten Funktionseinheiten erforderlich, so daß die Prioritätsreihenfolge sehr rasch und ohne zusätzliche Datenkommunikation über den Datenbus festgelegt werden kann. Ferner müssen sich die untergeordneten Funktionseinheiten (Slaves) während des Pollingbetriebs ständig aktiv melden, das heißt eine o.k.-Meldung absetzen. Die Busarchitektur ist damit für ein System mit aktiven Funktionselementen, insbesondere Sensoren, sehr gut geeignet.

Zusätzlich zur Informationsübertragung läßt sich über den Bus auch die Versorgungsenergie von der übergeordneten Steuereinheit zu den Funktionseinheiten übertragen, indem das Übertragungsprotokoll, das heißt der Datenaustausch zwischen Master und Slaves, vorzugsweise nur bipolar arbeitet, d.h. zwischen 0 und 1 wechselt. Durch die zyklische Pollingabfrage wird ferner auch ständig eine Taktfrequenz übertragen, so daß das gesamte Bussystem synchron arbeiten kann. Insbesondere dann, wenn es bei jedem Bit des Pollingkommandos einen Phasenwechsel gibt, ändert sich der Signalmittelwert während der Datenübertragung im wesentlichen nicht, so daß eine kontinuierliche Energiebereitstellung stattfinden kann.

Die Funktionseinheiten melden sich vorzugsweise in ihrem Zeitfenster mit Stromimpulsen, das heißt über eine entsprechende Strombelastung des Datenbusses, so daß der Spannungsmittelwert nicht variiert wird und zugleich doch der übergeordneten Steuereinheit zuverlässig der o.k.-Zustand gemeldet wird.

Die Funktionseinheiten benötigen folglich keinen eigenen Takt. Sofern sie gleichwohl eine eigene Takterzeugung aufweisen sollten, kann diese jederzeit durch die von der übergeordneten Steuereinheit übertragenen "1"-Bits getriggert und synchronisiert werden. Zudem ist die Energiezuführung zu den Funktionseinheiten für deren Betrieb sehr gleichmäßig, was ebenfalls durch die Abfolge der in dem Pollingkommando vorgesehenen "1"-Bits gewährleistet wird.

Die Erfindung kann bei einem Sensorbus oder einem Zündbus für Insassenschutzsysteme, oder auch bei einem beliebigen anderen Bussystem, zum Einsatz kommen. In den beiden erstgenannten Fällen ist die übergeordnete Steuereinheit beispielsweise durch ein zentrales Airbag-Steuergerät gebildet, das ständig die Kontrolle über alle Sensoren und/oder Zündpillen behält.

Die Erfindung wird nachstehend anhand eines Ausführungsbeispiels unter Bezugnahme auf die Zeichnungen näher beschrieben.
- Fig. 1: zeigt ein schematisches Blockschaltbild eines Ausführungsbeispiels des Datenübertragungssystems, und
- Fig. 2: zeigt die Struktur der für die Kommunikation zwischen der Master- und den Slave-Einheiten verwendeten Datenworte.

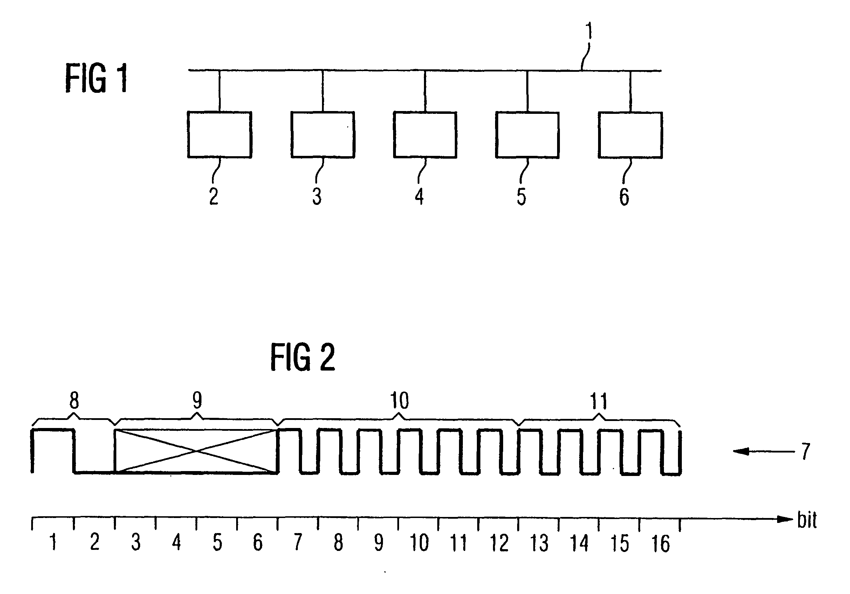

Bei dem in Fig. 1 gezeigten Datenübertragungssystem ist eine übergeordnete Steuereinheit 3 vorhanden, die hier als zentrales Steuergerät ausgebildet ist und die Kommunikation als Master-Einheit steuert. Die Steuereinheit 3 ist über einen gemeinsamen Datenbus 1 mit Funktionseinheiten 2, 4, 5 und 6 verbunden, die hier als Sensoren ausgebildet sind. Die Funktionseinheiten können aber auch Zündpillen oder sonstige Steuerkomponenten sein oder aus einer Kombination aus Sensoren und Zündpillen oder sonstigen Elementen bestehen. Der Datenbus 1 ist vorzugsweise als Zweidrahtleitung ausgebildet und dient nicht nur zur Datenübertragung, sondern auch zur Energieversorgung der Funktionseinheiten 2, 4, 5 und 6. Zusätzlich kann der Datenbus auch als Steuerbus dienen, das heißt Steuerbefehle übertragen.

Das gezeigte Ausführungsbeispiel ist als Datenübertragungssystem eines Kraftfahrzeug-Insassenschutzsystems ausgebildet, bei dem der Sensor 2 als Sitzbelegungssensor dient, der erkennt, ob der Beifahrersitz und/oder die Rücksitze des Kraftfahrzeugs tatsächlich belegt sind. Je überwachtem Sitz ist jeweils ein eigener Sitzbelegungssensor 2 vorgesehen. Da sich während des Fahrbetriebs der Sitzbelegungszustand in der Regel nicht ändert, ist eine Abfrage des Sitzbelegungszustands nur zu Beginn des Fahrbetriebs und gegebenenfalls in großen Zeitabständen erforderlich, so daß die Sensorabfragefrequenz sehr niedrig sein kann. Anstelle von Sitzbelegungssensoren 2 können auch allgemein auf anderem Prinzip basierende Insassenerkennungssensoren vorgesehen sein, die das Vorhandensein von Passagieren auf dem Beifahrersitz und/oder den Kraftfahrzeug-Rücksitzen detektieren können. Dies ist für die Unterdrückung der Auslösung von Insassenschutzmitteln nicht belegter Sitze, beispielsweise von Airbags oder Gurtstraffersystemen wichtig.

Die Sensoren 4 bis 6 sind Aufprallsensoren zur Erkennung eines Aufpralls und dessen Einwirkungsorts und gegebenenfalls - richtung. Die Sensoren 4 bis 6 sind an zentraler Kraftfahrzeugstelle sowie an Front, Heck und/oder Seiten des Kraftfahrzeugs in bekannter Weise angeordnet, wobei die Sensoranzahl je nach Konstruktionsvorgaben variabel ist. Die Sensoren stellen die Slave-Einheiten der übergeordneten Steuereinheit (Master) 3 dar.

In Fig. 2 ist die Struktur der Datenworte 7 veranschaulicht, die von der zentralen Steuereinheit 3 wiederholt ausgesendet werden. Mindestens während des Fahrbetriebs des Kraftfahrzeugs nach Überschreiten der vorgesehenen Mindestfahrgeschwindigkeit für eine Auslösung des Insassenschutzsystems bei einem Unfall wird dieses Datenworte 7 quasi-permanent ausgesendet, das heißt im störungsfreien Fall ohne oder mit nur geringem zeitlichen Abstand zyklisch wiederholt. Das Datenwort 7 ist ein unipolares Spannungssignal, dessen Pegelzustände zwischen höherem und tieferem Spannungswert wechseln. Hierdurch wird sichergestellt, daß ständig Spannung an der Übertragungsleitung anliegt, so daß eine Rückmeldung in Form von Stromimpulsen z.B. durch einfache Impedanzbelastung möglich ist. Gemäß Fig. 2 liegt das Datenwort in Form eines Biphase-Codes vor, bei dem eine "Eins" durch einen Phasenwechsel mittig während eines Bits signalisiert wird, wohingegen eine "0" durch einen Phasenwechsel nur am Bitende repräsentiert ist. Das Datenwort 7 ist ein 16-Bit-Signal. Die Bitnummern sind auf der unterhalb des Datenworts 7 dargestellten Bitachse eingetragen.

Jedes Datenwort 7 umfaßt die in Fig. 2 gezeigten Signalabschnitte 8 bis 11. Der Signalabschnitt 8 besteht aus zwei Startbits, die den Datenwortbeginn signalisieren und durch zwei Nullen repräsentiert sind. Hieran schließt sich der Signalabschnitt 9 an, in dem entweder ein bestimmtes Kommando, insbesondere ein Polling-Kommnando, oder eine Adresse einer anzusprechenden Funktionseinheit, insbesondere eines Sensors 2, 4, 5 oder 6, übertragen wird. Der Signalabschnitt 9 umfaßt hier die Bits 3 bis 6 des Datenworts. Während der nachfolgenden Signalabschnitte 10 und 11 (Bits 7 bis 16) überträgt die Steuereinheit 3 im Polling-Betrieb (im Signalabschnitt 9 ist in diesem Fall das Polling-Kommando vorgegeben) eine Folge von logischen "1", so daß in der Mitte jedes Bits 7 bis 16 ein Signalpegelwechsel von "H" auf "L" auftritt. Die zweite Bithälfte jedes Bits 7 bis 16 weist daher niedrigen Spannungspegel auf. Während dieses niedrigen Spannungspegels können die an den Datenbus 1 angeschlossenen Sensoren ihre o.k.-Meldungen zur Steuereinheit 3 in Form von strommodulierten Impulsen zurücksenden, wobei die Strommodulation durch Belastung des Datenbusses durch den jeweils sendenden Sensor hervorgerufen wird. Beispielsweise kann ein Sensor, das heißt die in ihm vorgesehene Kommunikationseinrichtung, einen Lastwiderstand mit dem Datenbus 1 während der Niedrigpegelphase des ihm zugeordneten Bits des Datenworts 7 verbinden, so daß eine von der Steuereinheit 3 (Master) detektierbare Strombelastung des Datenbusses 1 hervorgerufen wird. Dieser Strombelastungsimpuls stellt die "o.k."-Meldung des jeweiligen Sensors dar. Jeder Slave-Einheit (2, 4, 5, 6) ist während des Polling-Betriebs selektiv ein festes Bit zugeordnet, währenddessen sie ihre Zustandsmeldung absetzen kann, beispielsweise das Bit "7" für den Sensor 4, das Bit "8" für den Sensor 5, usw.. Mit dem dargestellten Datenwort 7 lassen sich folglich während des Polling-Betriebs 10 Slave-Einheiten (Bits 7 bis 16) ansprechen. Die jeweiligen Bits 7 bis 16 des Datenworts 7 definieren somit im Polling-Betrieb die jeweiligen Adressen der Slave-Einheiten. Sofern weniger Slave-Einheiten als Bits in den Signalabschnitten 10 und 11 vorhanden sein sollten, können einem, mehreren oder ggf. auch allen Slave-Einheiten auch zwei oder mehr Bits zur Rückmeldung zur Verfügung gestellt werden, so daß sie detailliertere Rückmeldungen absetzen können, z.B. "o.k.", "dringende Meldung", "normale Meldung" und dergleichen. Ein oder mehrere dieser Bits können dann jeweils auch als Checkbit(s) für die Rückmeldung dienen.

Während des Polling-Betriebs müssen sich somit die Slave-Einheiten aktiv (durch einen Stromimpuls) in ihrem Zeitfenster melden und hierdurch ihren ordnungsgemäßen Zustand (keine internen Funktionsfehler, kein Aufprall, keine sonstige Nachricht ist abzusetzen) signalisieren. Sofern jedoch eine Slave-Einheit gestört ist oder aber gezielt eine Nachricht zur Master-Einheit übertragen möchte, signalisiert sie dies der Master-Einheit dadurch, daß sie während des Polling-Betriebs während des ihr zugeordneten Bits keinen Belastungsimpuls absetzt. Die Master-Einheit 3 erkennt diese fehlende Rückmeldung einer Slave-Einheit und geht dann sofort von dem Polling-Betrieb auf eine selektive Adressierung der sich nicht meldenden Slave-Einheit über. In diesem Fall wird dann im nächsten Datenwort 7 anstelle eines Polling-Kommandos im Signalabschnitt 9 die Adresse gesendet, die der sich nicht meldenden Slave-Einheit zugeordnet ist. Da die anderen Slave-Einheiten nun weder über ein Polling-Kommando noch über ihre eigene Adresse angesprochen werden, bleiben sie stumm, das heißt übertragen während der Signalabschnitte 10 und 11 keine Informationen. Die Master-Einheit 7 erzeugt den sich an die Adresse 9 anschließenden Signalabschnitt 10 in gleicher Weise wie bislang, so daß sich der in Fig. 2 gezeigte Verlauf auch hier ergibt. Nun stehen aber alle Bits 7 bis 12 (Niedrigpegel-Phasen) für die adressierte Slave-Einheit zur Verfügung, so daß diese eine Mehrbit-Nachricht zur Master-Einheit senden kann. Die Slave-Einheit kann beispielsweise ein Datenwort, einen Meßpegel oder Statusinformationen übertragen, die z.B. einen detektierten Crash (etwa das Überschreiten eines Beschleunigungsgrenzwerts oder die Stärke der gemessenen Beschleunigung) signalisieren.

Damit kann eine Slave-Einheit ihre Sensorinformation ohne Kollisionsproblematik sehr rasch absetzen, indem sie lediglich während des nächsten Polling-Kommandos keine o.k.-Meldung überträgt und dann sofort von der Master-Einheit, die als nächstes kein Polling-Kommando, sondern die entsprechende Adresse im Signalabschnitt 9 des nächsten Datenworts 7 generiert, selektiv adressiert wird, wonach sie ihre Information in Form eines Mehr-Bit-Worts übertragen kann.

Sollte die selektiv adressierte Slave-Einheit jedoch während der Bits 7 bis 12 keine vernünftige Information bereitstellen, wird dies von der Master-Einheit als Betriebsstörung der Slave-Einheit eingestuft (keine "o.k."-Meldung während eines Polling-Kommandos, keine auswertbare Information bei selektiver Adressierung der Slave-Einheit). Eine solche, als fehlerhaft erkannte Slave-Einheit kann während des nachfolgenden Polling-Betriebs ausgeblendet werden, das heißt wird dann nicht nach jedem Polling-Kommando nochmals überprüft. Eine Statusabfrage bzw. Kommunikation findet dann nur mit den übrigen Slave-Einheiten statt.

Mit dieser Sendeberechtigungssteuerung wird vermieden, daß mehrere Slave-Einheiten gleichzeitig auf den Bus zugreifen können, so daß keine Kollisionsgefahr besteht. Zugleich ergibt sich der Vorteil, daß die Master-Einheit keine asynchron übertragenen Slave-Signale aufnehmen muß, so daß auf andernfalls notwendige Interrupt-Behandlungsroutinen verzichtet werden kann. Der Master-Einheit sind diejenigen Zeitpunkte, zu denen die (vorzugsweise strommodulierten) Slave-Signale zu erwarten sind, jeweils bekannt.

Weiterhin ist hierbei von Vorteil, daß die Slave-Einheiten keinen eigenen Takt benötigen, da sie durch den Takt der Master-Einheit getaktet werden können. Sofern die Slave-Einheiten dennoch über eine eigene Takterzeugung verfügen sollten, kann diese durch die von der Master-Einheit übertragenen "Einsen" jederzeit getriggert und/oder synchronisiert werden. Die Taktfrequenz wird von der Master-Einheit aufgrund der Datenwortgestaltung 7 ständig übertragen und kann damit die Synchronisation des gesamten Bussystems bewirken.

Wenn im Signalabschnitt 9 die Adresse einer einzelnen Slave-Einheit gesendet wird, dienen die Bits im Signalabschnitt 11 (Bits 13 bis 16) zur Übertragung von Kontrollbits, beispielsweise eines Fehlererkennungs- und/oder Korrekturcodes, z.B. CRC4. Die Master-Einheit selbst erzeugt hierbei keinen eigenen Fehlerprüfcode, sondern generiert die Bits des Signalabschnitts 11 mit dem in Fig. 2 gezeigten Verlauf, das heißt in identischer Weise wie bei der Übertragung eines Polling-Kommandos. Die adressierte Slave-Einheit ist jedoch so programmiert, daß sie eine Fehlererkennungsroutine über ihre eigene Adresse und auch die von ihr generierten und in den Niedrigpegel-Phasen des Signalabschnitts 10 zur Master-Einheit zu übertragenden Informationen ausführt, beispielsweise gemäß der CRC-Methode. Das hierbei gebildete Fehlererkennungs- und/oder Fehlerkorrekturwort wird in den Niedrigpegel-Phasen des Signalabschnitts 11 zur Master-Einheit gesendet. Die Master-Einheit überprüft die im Signalabschnitt 11 empfangenen Kontrollbits unter Berücksichtigung der von ihr generierten Slave-Adresse (im Signalabschnitt 9) und der von ihr empfangenen Slave-Informationen (in den Niedrigpegel-Phasen des Signalabschnitts 10) und auf der Grundlage des hier bekannten, in der Slave-Einheit verwendeten Fehlerprüfcodes. Weicht beispielsweise die hierbei gebildete Prüfsumme von der von der Slave-Einheit übermittelten Prüfsumme ab, stellt dies einen Hinweis auf einen Fehler entweder bei der Übertragung oder in der angeschlossenen Slave-Einheit dar. Bei Fehlererkennung können geeignete Fehlerbehebungsroutinen ausgeführt werden, beispielsweise eine nochmalige Übertragung des selektiv adressierenden Datenworts 7 von der Master-Einheit zum Datenbus 1, um hierdurch die adressierte Slave-Einheit zur nochmaligen Signalerzeugung zu veranlassen.

Bei der Polling-Abfrage kann auch der Fall auftreten, daß sich zwei oder mehr Slave-Einheiten nicht mit ihrem Antwort-Signal (Stromimpuls im zugeordneten Bit) melden, da sie beispielsweise gleichzeitig senden wollen oder gestört bzw. überhaupt nicht an den Bus angeschlossen sind. Die Master-Einheit kann in einem solchen Fall aufgrund einer in ihr gespeicherten oder generierten Prioritätsreihenfolge festlegen, in welcher Reihenfolge sie die sich nicht meldenden Slave-Einheiten abfragt. Die Prioritätsreihenfolge kann in Abhängigkeit von weiteren Parametern, zum Beispiel dem Sitzbedingungszustand, variabel sein. Da allein die Master-Einheit die Prioritätsreihenfolge enthält und festlegt, läßt sich eine Prioritätsänderung problemlos und äußerst rasch ausführen. Melden sich beispielsweise gleichzeitig zwei Seitenaufprallsensoren an der Vordertür und der Rücktür, indem sie kein o.k.-Signal rücksenden, kann die Reihenfolge der Abfrage beispielsweise abhängig davon festgelegt werden, ob der Rücksitz unbelegt ist oder nicht. Ist der Rücksitz nicht belegt, kann das Sensorsignal des Seitenaufprallsensors der Rücktür entweder vollständig vernachlässigt werden oder zeitlich erst nach dem Sensorsignal des vorderen Aufprallsensors abgefragt und entsprechend ausgewertet werden.

Damit ist aufgrund der Tatsache, daß die Master-Einheit nicht nur stets die Kontrolle über den gesamten Datenbus 1 besitzt, sondern auch jederzeit die Prioritäten bei der Abfrage der Funktionseinheiten aktualisieren kann, eine Optimierung der Datenkommunikation unter Berücksichtigung der aktuellen Gegebenheiten, beispielsweise der Sitzbelegungen oder dergleichen, möglich, wobei dennoch stets eine sehr rasche Informationsübertragung einer Slave-Einheit zur Master-Einheit gewährleistet bleibt.

Bei dem Protokoll gemäß Fig. 2 können maximal 10 Slave-Einheiten am Datenbus 1 angeschlossen werden. In diesem Fall kann bei einer Übertragungsrate von 125 kBaud eine Slave-Einheit ihre Information in einem Zeitintervall von 256 Mikrosekunden bis 512 Mikrosekunden absitzen.

Wenn eine höhere Anzahl von Slave-Einheiten gewünscht ist, kann beispielsweise die Protokollänge auf 24 Bits erweitert werden, wobei folgende Bit-Zuordnungen vorgesehen sein können: 3 Startbits im Signalabschnitt 8; 5 Kommando- bzw. Adressbits im Signalabschnitt 9; und 16 Informationsbits in den Signalabschnitten 10 und 11. In diesem Fall kann die Übermittlung einer Slave-Information bei der vorgenannten Übertragungsrate von 125 kBaud zwischen 384 Mikrosekunden und 768 Mikrosekunden dauern. Sofern eine raschere Übertragung benötigt wird, kann die Übertragungsrate erhöht werden. Bei einer Verdopplung auf 250 kBaud dauert die Übertragung einer Information von einer Slave-Einheit nur noch zwischen 192 Mikrosekunden und 384 Mikrosekunden.

Mit dem in Fig. 2 gezeigten Spannungssignalverlauf des Kommunikationsprotokolls ist zugleich auch eine kontinuierliche Energiespeisung der Slave-Einheiten sichergestellt. Der Mittelwert der Spannungsspeisung ändert sich während der Datenübertragung nicht, da es bei jedem Bit einen Phasenwechsel gibt. Die Slave-Einheiten sind vorzugsweise mit einem eingangsseitig an den Datenbus 1 angeschlossenen Spannungsregler versehen, der ausgangsseitig die konstant geregelte Versorgungsspannung für die betreffende Slave-Einheit abgibt.

## Patentansprüche

1. Datenübertragungsverfahren in einem Datenübertragungssystem, das eine übergeordnete Steuereinheit (3) und mehrere, mit dieser über einen gemeinsamen Datenbus (1) verbundene Funktionseinheiten (2, 4, 5, 6) aufweist, bei dem in einem Polling-Betrieb ein Abfragesignal (7) von der übergeordneten Steuereinheit (3) über den Datenbus (1) an die Funktionseinheiten (2, 4, 5, 6) übertragen wird und von denjenigen Funktionseinheiten, die korrekt funktionieren und keine Informationen zu senden haben, ein Bestätigungssignal rückübertragen wird, und bei dem die übergeordnete Steuereinheit (3) bei Ausbleiben eines Bestätigungssignals von einer Funktionseinheit ein speziell diese adressierendes Kommandosignal aussendet, durch das diese Funktionseinheit selektiv zur Datensendung veranlaßt wird.

2. Datenübertragungsverfahren nach Anspruch 1, **dadurch gekennzeichnet, daß** das Abfragesignal (7) zyklisch gesendet wird.

3. Datenübertragungsverfahren nach Anspruch 1 oder 2, **dadurch gekennzeichnet, daß** die Funktionseinheiten (2, 4, 5, 6) Aufprall- und/oder Insassenerkennungssensoren eines Kraftfahrzeug-Insassenschutzsystems umfassen.

4. Datenübertragungsverfahren nach einem der vorhergehenden Ansprüche, **dadurch gekennzeichnet, daß** die Funktionseinheiten Zündpillen zum Zünden von Insassenschutzmitteln eines Kraftfahrzeug-Insassenschutzsystems umfassen.

5. Datenübertragungsverfahren nach einem der vorhergehenden Ansprüche, **dadurch gekennzeichnet, daß** das Abfragesignal (7) einen Signalabschnitt (9) zur Übertragung eines Polling-Kommandos sowie einen sich hieran anschließenden weiteren Signalabschnitt (10, 11) aufweist, in dem eine Mehrzahl von regelmäßigen, zwischen hohem und tiefem Potential wechselnden Spannungsimpulsen enthalten ist.

6. Datenübertragungsverfahren nach Anspruch 5, **dadurch gekennzeichnet, daß** die Funktionseinheiten ihr Bestätigungssignal in Form von Stromimpulsen während der Niedrigpegel-Phasen der Spannungsimpulse des weiteren Signalabschnitts (10, 11) senden.

7. Datenübertragungsverfahren nach einem der vorhergehenden Ansprüche, **dadurch gekennzeichnet, daß** das Kommandosignal gleichen Aufbau wie das Abfragesignal besitzt, wobei jedoch anstelle des den Polling-Betrieb vorgebenden Signalabschnitt (9) ein Adresssignalabschnitt vorgesehen ist.

8. Datenübertragungsverfahren nach Anspruch 7, **dadurch gekennzeichnet, daß** eine adressierte Funktionseinheit ihre Informationen in Form von Stromimpulsen während Niedrigpegel-Phasen von sich an den Adressabschnitt anschließenden Spannungsimpulsen des Kommandosignals überträgt und zusätzlich Kontrollbits generiert, die im Anschluß an die Informationsübertragung während weiterer Niedrigpegel-Phasen des Kommandosignals zur übergeordneten Steuereinheit (3) gesendet werden.

9. Datenübertragungssystem, das eine übergeordnete Steuereinheit (3) und mehrere, über einen gemeinsamen Datenbus (1) mit dieser verbundene Funktionseinheiten (2, 4, 5, 6) aufweist, wobei die übergeordnete Steuereinheit (3) derart ausgelegt ist, daß sie wiederholt ein Abfragesignal (7) über den Datenbus (1) zu den Funktionseinheiten überträgt, durch das die Funktionseinheiten zur Rückmeldung eines ihren korrekten Betrieb signalisierenden Bestätigungssignals aufgefordert werden, und wobei die Steuereinheit (3) bei Ausbleiben eines Bestätigungssignals einer Funktionseinheit ein speziell diese adressierendes Kommandosignal aussendet, durch das diese Funktionseinheit zur Übertragung eines Informationssignals zur Steuereinheit aufgefordert wird.

10. Datenübertragungssystem nach Anspruch 9, bei dem die Funktionseinheiten (2, 4, 5, 6) eingangsseitig an den Datenbus (1) angeschlossene Spannungsregler aufweisen, die aus den Abfragesignalen und Kommandosignalen die Versorgungsgleichspannung für die betreffende Funktionseinheit generieren.

## Claims

1. Data transmission method in a data transmission system which has a superordinate control unit (3) and a plurality of function units (2, 4, 5, 6) which are connected to the latter via a common data bus (1) and in which an interrogation signal (7) is transmitted in a polling mode from the superordinate control unit (3) to the function units (2, 4, 5, 6) via the data bus (1), and a confirmation signal is transmitted back by those function units which are functioning correctly and do not have any information to send, and in which, when a confirmation signal is not received from a function unit, the superordinate control unit (3) outputs a command signal which specifically addresses said function unit and selectively causes it to transmit data.

2. Data transmission method according to Claim 1, **characterized in that** the interrogation signal (7) is transmitted cyclically.

3. Data transmission method according to Claim 1 or 2, **characterized in that** the function units (2, 4, 5, 6) comprise impact and/or vehicle occupant detection sensors of a motor vehicle occupant protection system.

4. Data transmission system according to one of the preceding claims, **characterized in that** the function units comprise firing caps for firing vehicle occupant protection means of a motor vehicle occupant protection system.

5. Data transmission system according to one of the preceding claims, **characterized in that** the interrogation signal (7) comprises a signal segment (9) for transmitting a polling command and a further signal segment (10, 11) which adjoins the said signal segment (9) and which contains a multiplicity of regular voltage pulses which alternate between high and low potential.

6. Data transmission method according to Claim 5, **characterized in that** the function units transmit their confirmation signal in the form of current pulses during the low level phases of the voltage pulses of the further signal segment (10, 11).

7. Data transmission method according to one of the preceding claims, **characterized in that** the command signal has the same structure as the interrogation signal, but an address signal segment is provided instead of the signal segment (9) which predefines the polling mode.

8. Data transmission method according to Claim 7, **characterized in that** an addressed function unit transmits its information in the form of current pulses during low level phases of voltage pulses of the command signal which adjoin the address segment, and additionally generates check bits which are transmitted to the superordinate control unit (3) after the transmission of information during further low-level phases of the command signal.

9. Data transmission system which has a superordinate control unit (3) and a plurality of function units (2, 4, 5, 6) which are connected to the latter via a common data bus (1), in which the superordinate control unit (3) is configured in such a way that it repeatedly transmits an interrogation signal (7) to the function units via the data bus (1), said interrogation signal (7) requesting the function units to acknowledge the confirmation signal which signals that they are operating correctly, and in which, when the confirmation signal of a function unit is not received, the control unit (3) outputs a command signal which specifically addresses said function unit and which requests it to transmit an information signal to the control unit.

10. Data transmission system according to Claim 9, in which the function units (2, 4, 5, 6) have voltage regulators which are connected to the data bus (1) on the input side and which generate the d.c. supply voltage for the respective function unit from the interrogation signals and command signals.

## Revendications

1. Procédé de transmission de données dans un système de transmission de données qui comprend une unité de commande principale (3) et plusieurs unités fonctionnelles (2, 4, 5, 6) qui y sont reliées par un bus de données commun (1), dans lequel, dans un mode polling, un signal d'interrogation (7) est transmis de l'unité de commande principale (3) aux unités fonctionnelles (2, 4, 5, 6) par l'intermédiaire du bus de données (1), dans lequel un signal d'accusé de réception est transmis en retour par les unités fonctionnelles qui fonctionnent correctement et qui n'ont pas d'informations à envoyer, et dans lequel, en cas de manque d'un signal d'accusé de réception d'une unité fonctionnelle, l'unité de commande principale (3) émet un signal d'ordre qui adresse spécialement cette unité et par lequel cette unité fonctionnelle est amenée à émettre sélectivement des données.

2. Procédé de transmission de données selon la revendication 1, **caractérisé en ce que** le signal d'interrogation (7) est émis cycliquement.

3. Procédé de transmission de données selon la revendication 1 ou 2, **caractérisé en ce que** les unités fonctionnelles (2, 4, 5, 6) comprennent des capteurs de choc et/ou de détection d'occupants d'un système de protection des occupants d'un véhicule automobile.

4. Procédé de transmission de données selon une des revendications précédentes, **caractérisé en ce que** les unités fonctionnelles comprennent des amorces destinées à allumer des moyens de protection des occupants d'un système de protection des occupants d'un véhicule automobile.

5. Procédé de transmission de données selon une des revendications précédentes, **caractérisé en ce que** le signal d'interrogation (7) présente un segment de signal (9) servant à la transmission d'un ordre de polling, ainsi qu'un autre segment de signal (10, 11) qui y fait suite et dans lequel est contenue une pluralité d'impulsions de tension régulières, qui s'inversent entre un haut potentiel et un bas potentiel.

6. Procédé de transmission de données selon la revendication 5, **caractérisé en ce que** les unités fonctionnelles émettent leur signal d'accusé de réception sous la forme d'impulsions de courant pendant la phase de bas niveau des impulsions de tension de l'autre segment de signal (10, 11).

7. Procédé de transmission de données selon une des revendications précédentes, **caractérisé en ce que** le signal d'ordre possède la même construction que le signal d'interrogation, mais un segment de signal d'adresse est prévu en replacement d'un segment de signal (9) qui prescrit le mode polling.

8. Procédé de transmission de données selon la revendication 7, **caractérisé en ce qu'**une unité fonctionnelle adressée transmet ses informations sous la forme d'impulsions de courant pendant des phases de bas niveau d'impulsions de tension du signal d'ordre qui font suite au segment d'adresse et, en supplément, génère des bits de contrôle qui sont envoyés à l'unité de commande principale (3) à la suite de la transmission d'informations pendant d'autres phases de bas niveau du signal d'ordre.

9. Système de transmission de données qui présente une unité de commande principale (3) et plusieurs unités fonctionnelles (2, 4, 5, 6) qui y sont reliées par un bus de données commun (1), dans lequel l'unité de commande principale (3) est construite de manière à transmettre répétitivement aux unités fonctionnelles par l'intermédiaire du bus de données (1) un signal d'interrogation (7) par lequel les unités fonctionnelles sont invitées à envoyer en retour un signal d'accusé de réception qui signale leur bon fonctionnement, et dans lequel en cas de manque d'un signal d'accusé de réception d'une unité fonctionnelle, l'unité de commande (3) émet un signal d'ordre spécial qui adresse cette unité et par lequel cette unité fonctionnelle est invitée à transmettre un signal d'information à l'unité de commande.

10. Procédé de transmission de données selon la revendication 9, dans lequel les unités fonctionnelles (2, 4, 5, 6) présentent, côté entrée, des régulateurs de tension connectés au bus de données (1) qui génèrent, à partir des signaux d'interrogation et des signaux d'ordre, la tension continue d'alimentation pour l'unité fonctionnelle considérée.
